# EUROPÄISCHE PATENTSCHRIFT

(11) **EP 1 740 337 B1**
(45) Veröffentlichungstag und Bekanntmachung des Hinweises auf die Patenterteilung: **16.12.2009**
(21) Anmeldenummer: 05740573.0
(22) Anmeldetag: 30.03.2005
(51) Int. Cl.: B23C 5/20, B23B 51/10

(54) **FRÄSKOPF ZUM FRÄSEN VON FASEN**
MILLING HEAD FOR MILLING CHAMFERS
TETE DE FRAISAGE DESTINEE AU FRAISAGE DE BISEAUX

(30) Priorität: 31.03.2004 DE 102004016566; 11.05.2004 DE 102004023743
(43) Veröffentlichungstag der Anmeldung: 10.01.2007
(73) Patentinhaber: Rieth, Stephan, D-66606 St. Wendel (DE)
(72) Erfinder: Rieth, Stephan, D-66606 St. Wendel (DE)
(74) Vertreter: Bernhardt, Winfrid
(86) Internationale Anmeldenummer: PCT/DE2005/000592
(87) Internationale Veröffentlichungsnummer: WO 2005/095038

(56) Entgegenhaltungen:
- DE-C1- 3 730 943
- US-A- 4 293 254
- US-A- 5 913 643

## Beschreibung

Die Erfindung bezieht sich auf einen Fräskopf zum Fräsen von Fasen, insbesondere für einen mobilen Fasenfräser, mit aufeinanderfolgenden Sitzen für Schneidplatten, wie z.B. aus US-A- 4293254 bekannt ist.

Fasen sind in großem Umfang an Bauteilen zu fräsen zur Vorbereitung von V- oder X-Schweißnähten, ferner als Sicht- oder Schutzfasen. Die Fasen können an geraden Kanten oder an gekrümmten Konturverläufen liegen. Gerade Kanten lassen sich mit zylindrischen Fräsköpfen bearbeiten. Gekrümmte Konturverläufe verlangen konische Fräsköpfe. Da die Breite der benötigten Fasen in der Regel höchstens 50 mm beträgt, kann mit Schneidplatten solcher Länge gearbeitet werden.

Der Erfindung liegt die Aufgabe zugrunde, die Schnittleistung des Fräskopfs zu erhöhen.

Gemäß der Erfindung wird dieser Zweck dadurch erfüllt,
dass die genannten Sitze
eine Stellung haben, bei der die vorgesehenen Schneidplatten, die einen Keilwinkel von 40 bis 75° aufweisen, jeweils im Mittel mit einem positiven Spanwinkel von mindestens 6° und einem Freiwinkel von mindestens 6° arbeiten,
und für einen Besatz mit Schneidplatten unter versetzter Anordnung der Schneidkanten derart vorgesehen sind, dass jeweils nur eine Schneidkantenlänge wirksam ist, welche höchstens 70% der entsprechend der Fasenbreite erforderlichen Gesamtschneidkantenlänge beträgt.

Mit der ersten Maßnahme ergeben sich günstige Verhältnisse für das Eindringen der Schneidplatten in das Material. Die Schneidplatten schneiden verhältnismäßig scharf ein. Die zweite Maßnahme beruht auf der Erkenntnis, dass ungeachtet der beim Fasenfräsen vorhandenen Möglichkeit, die gesamte Fasenbreite mit einer eine entsprechend lange Schneidkante aufweisenden Schneidplatte zu überstreichen, eine Aufteilung in kleinere, versetzt hintereinander angeordnete Schneidkanten die bessere Lösung ist, und zwar ggf. auch dann, wenn die Gesamtlänge aller Schneidkanten an dem Fräskopf geringer wird als 30 mm. Die kürzere Schneidkante verlangt weniger Anpresskraft und erlaubt einen schnelleren Vorschub des Fräskopfes. Besonders bei mobilen Fasenfräsern wirkt sich der Vorteil aus.

Die verkürzte Schneidkantenlänge kann statt durch eine kürzere Schneidplatte auch an einer langen Schneidplatte geschaffen werden, und zwar dadurch, dass an dieser die Schneidkante durch Mulden oder andere, z.B. flach-dreieckige, Ausnehmungen auf der Oberfläche d er Schneidplatte unterbrochen ist. Die erforderliche Versetzung ist dann nur vergleichsweise klein. Die lange Schneidplatte hat einen entsprechend guten Sitz.

Die Maßnahmen können an einem konischen wie auch an einem zylindrischen Fräskopf getroffen werden.
Auf einen konischen Fräskopf beziehen sich die obigen Angaben des minimalen Spanwinkels und des minimalen Freiwinkels "im Mittel"; beide Winkel verändern sich hier mit dem Radius des Fräskopfes. Die Angabe des Keilwinkels ist auf die Grundausbildung der Schneidplatte ohne eine zusätzliche Einkehlung unmittelbar an der Schneidkante bezogen.

In der Regel wird die wirksame Schneidkante nicht länger als 12 mm, höchste ns 15 mm, sein.

An konischen Fräsköpfen ist mit der versetzten Anordnung eine bessere Platzausnutzung möglich. Die Sitze können hier in zwei koaxialen Reihen angeordnet sein, von denen die äußere Reihe doppelt so viele Sitze wie die innere aufweist.

Es können sich aber auch Sitzausbildungen jeweils über die ganze Mantellinie des, konischen oder zylindrischen, Fräskopfs erstrecken und unterschiedliche Sitze für die Schneidplatten z.B. durch unterschiedlich angeordnete Gewindebohrungen für eine Befestigungsschraube der Schneidplatte aufweisen. Stattdessen wären, insbesondere bei den langen Schneidptatten mit unterbrochener Schneidkante, auch auf gleichen Sitzen angeordnete unterschiedliche Platten oder gleiche Platten mit unterschiedlichen Schneidkanten an ihren verschiedenen Seiten möglich derart, dass durch Aufeinanderfolge der verschiedenen Platten bzw. durch abwechselnde Seitenausrichtung der gleich en Platten die Schneidkanten versetzt angeordnet werden können. Auch mit etwas außermittigen Bohrungen in den Platten für die Befestigungsschrauben könnten Versetzungsmöglichkeiten geschaffen werden.

Es versteht sich, dass auch im ersteren Falle alle Sitze auf einer anderen Mantellinie des Fräskopfs angeordnet sind, damit sich möglichst immer nur eine Schneidkante in Eingriff befindet, und dass bei den Versetzungen Überschneidungen bleiben, die keine Grate entstehen lassen und/od er entstandene Grate wegnehmen.

Da die Schneidplatten bei der erfindungsgemäßen Anordnung mindestens an einem Ende der Schneidkante in das Material eindringen müssen, sollte(n) die Schneidkante(n) an ihren Enden jeweils durch eine Fase der Schneidplatte schräg abgewinkelt sein. Die Abwinklung soll sich mindestens auf der Eindringtiefe der Schneidplatte erstrecken.

Mit den nachstehenden vorteilhaften Ausgestaltungen der Erfindung kann die Schnittleistung noch weiter erhöht werden:

Die Sitze sind vorzugsweise so angeordnet, dass die Schneidkanten in einem kleinen Winkel schräg zur Mantellinie des Fräskopfes ausgerichtet sind. Damit dringen die Schneidkanten auf einer Seite beginnend und nicht schlagartig auf ihrer ganzen Länge zugleich in das Material ein. D er Lauf des Fräskopfs wird ruhiger.

Bei den mit ihrer Mittelachse auf einer Mantellinie eines konischen Fräskopfes angeordneten Schneidplatten ergibt sich eine solche Schrägstellung in gewissem Maße von selbst. Sie kann aber noch dadurch verstärkt werden, dass schon die Mittelachse der Schneidplatte etwas schräg gestellt wird.
Auf einem zylindrischen Fräskopf muß immer die Mittelachse der Schneidplatte schräggestellt werden, wenn die Schneidkante schräg ausgerichtet sein soll.

Die vorgesehenen Schneidplatten sollen als Wendeplatten und im ganzen quaderförmig mit zwei Breitseiten ausgebildet sein und die Sitze sollen eine Auflagefläche für die eine Breitseite und eine die Schubkraft übertragende Stützfläche für eine Schmalseite oder umgekehrt aufweisen und die Wendeplatten an der der Stützfläche abgewandten Seite eine zwei Spanflächen bildende Einkehlung aufweisen, die, ggf. abgesehen von etwaigen Ein- und/oder Ausbuchtungen ihrer die Schneidkanten bildenden Ränder, einen durchgehend gleichbleibenden und zu der Mittelebene der Wendeplatte spiegelbildlichen Querschnitt hat, wobei die beiden Spanflächen eben sind und vorzugsweise in einem Winkel von 80 bis 150° zueinander stehen oder entsprechend ei ner Einkehlung runden Querschnitts konkav sind. Durch die Einkehlung werden die Späne schnell und solchermaßen in einem Bogen abgeführt, dass sie den fortschreitenden Schnitt nicht behindern.

In herstellungstechnischer Hinsicht besonders vorteilhaft ist schließlich die Ausgestaltung, dass an einem, konischen oder zylindrischen, Fräskopf die Sitze in zwei koaxialen Reihen angeordnet sind und der Fräskopf aus zwei jeweils eine der Reihen aufweisenden Segmenten zusammengesetzt ist.

Bei dem nach der Erfindung zustandekommenden aggressiven Eingriff der Schneidplatten muß der Fräskopf des mobilen Fasenfräsers besonders fest und sicher gehalten und geführt werden, wenn eine genaue, gleichmäßige Fase entstehen soll. Er ist deshalb vorzugsweise mit einer in seiner Nähe an der betreffenden Maschine angebrachten Führung in Form von Anschlägen, die den beiden die Fase begrenzenden Flächen des Werkstücks zugeordnet sind, versehen.

Im Falle eines zylindrischen Fräskopfes können die Anschläge gleitende oder mit Rollen versehene Leisten o.ä. sein.
Im Falle des konischen Fräskopfes ist vorzugsweise der eine Anschlag eine, vorzugsweise gegenüber dem Fräskopf axial verschiebbare und fixierbare, Scheibe und der andere Anschlag eine frei drehbare Rolle, die vorzugsweise nur eine schmale ringförmige Anschlagfläche an ihrem dem Fräskopf zugewandten axialen Ende aufweist.

Die Zeichnungen geben Ausführungsbeispiele der Erfindung wieder.
- Fig. 1: zeigt einen ersten Fräskopf in isometrischer Darstellung,
- Fig. 2: zeigt einen zweiten Fräskopf in iso metrischer Darstellung,
- Fig. 3: zeigt einen dritten Fräskopf in isometrischer Darstellung,
- Fig. 4: zeigt einen vierten Fräskopf in isometrischer Darstellung,
- Fig. 5: zeigt einen fünften Fräskopf in isometrischer Darstellung,
- Fig. 6: zeigt den Fräskopf nach Fig. 1 an einer Fräsmaschine und mit einer Führung,
- Fig. 7: zeigt die Anordnung nach Fig. 6 im Eingriff an einem Werkstück,
- Fig. 8: zeigt den Fräskopf nach Fig. 2 an einer Fräsmaschine und mit einer Führung im Eingriff an einem Werkstück, und
- Fig. 9: zeigt einen weiteren Fräskopf in isometrischer Darstellung.

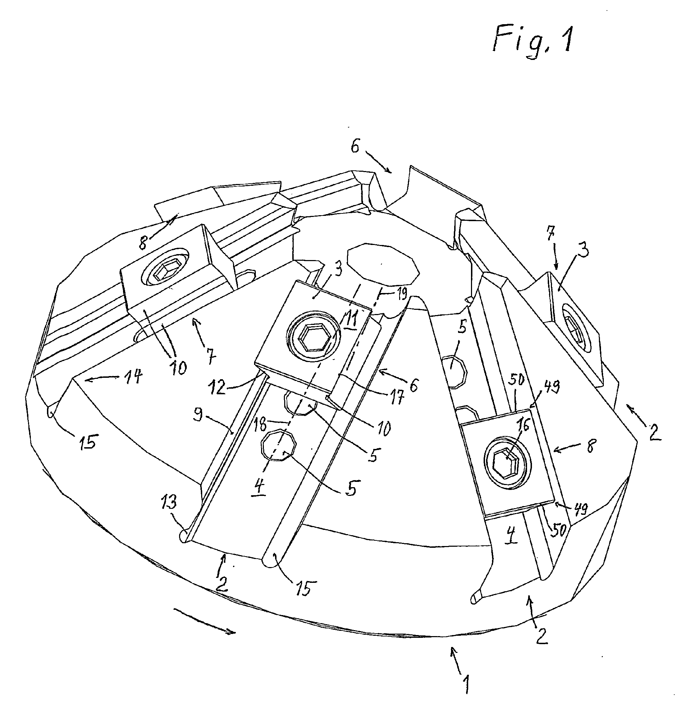

Fig. 1 lässt einen konischen Fräskopf 1 mit sechs Sitzausbildungen 2 für eine Wendeplatte 3 erkennen.
Die Sitzausbildungen 2 umfassen jeweils eine Auflagefläche 4 für die eine Breitseite der im ganzen quaderförmigen Wendeplatten 3, drei, wahlweise zu verwendende, Gewindebohrungen 5 für eine Schraube 16, mittels derer die Wendeplatten 3 auf ihrem Sitz 6, 7 bzw. 8 zu befestigen sind, sowie eine Stützfläche 9, an der dabei die der aktuellen Spanfläche 10 an der Freifläche 11 gegenüberliegende mögliche Spanfläche 12 zur Anlage kommt.

Von der Stützfläche 9 erstreckt sich entlang der anschließenden möglichen Spanfläche und um deren Schneidkante herum ein schmal er Freiraum 13.

Auf der anderen Seite liegt die Wendeplatte 3 an einem Rücksprung 14 und einem Ausschnitt 15 des Fräskopfs 1 frei.
So weit ist der Fräskopf 1 in der unveröffentlichten DE 1 03 20 173 offenbart, auf die ergänzend verwiesen sei.

Die Spanflächen 10 und 12 sind durch in die betreffenden Schmalseiten der Wendeplatten 3 eingebrachte, etwa V-förmige Nuten gebildet. In bezug auf die zur Freifläche 11 parallele Plattenmittelebene sind diese Nuten symmetrisch. Insgesamt können die Wendeplatten 3 also vier, durch die beiden V-Nuten gebildete Schneidkanten aufweisen.

Die Sitze 6, 7 und 8, die die Wendeplatten 3 infolge ihrer Befestigung in der vorderen, der mittleren und der hinteren Gewindebohrung 5 einnehmen, sind versetzt. Sie überschneiden sich jedoch, so dass keine Grate entstehen.
Immer befindet sich nur die z.B. 10 mm lange Schneidkante 17 einer Wendeplatte 3 im Eingriff in das Material.
Mit Rücksicht darauf, dass die Schneidkante auch mindestens an ihrem einen Ende in das Material eindringen muß, ist sie an den En den bei 49 schräg abgewinkelt. Die Abschrägung wird durch Fasen 50 der Schneidplatte erzeugt.

Da die Sitzausbildungen 2 auf einer Mantellinie 18 des konischen Fräskopfs liegen und die Schneidkante 17 parallel zu dieser verläuft, ist die Schneidkante 17 zu der an ihrem Ende vorhandenen Mantellinie 19 leicht schräg ausgerichtet.

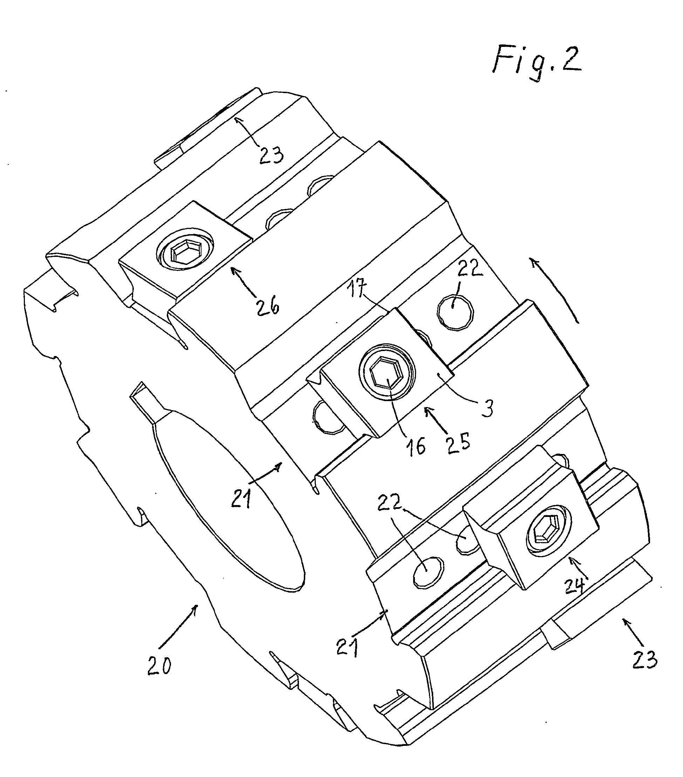

In Fig. 2 sind die Verhältnisse von Fig. 1 auf einen zylindrischen Fräskopf 20 übertragen.
Auf dem Zylindermantel sind acht Sitzausbildungen 2 1 für je eine Wendeplatte 3 geformt. Sie weisen je vier Gewindebohrungen 22 auf. Im Querschnitt sind sie mit den Sitzausbildungen 2 gleich. Die Wendeplatten 3 nehmen hier vier verschiedene, gegeneinander versetzte Sitze 23,24,25 und 26 ein.

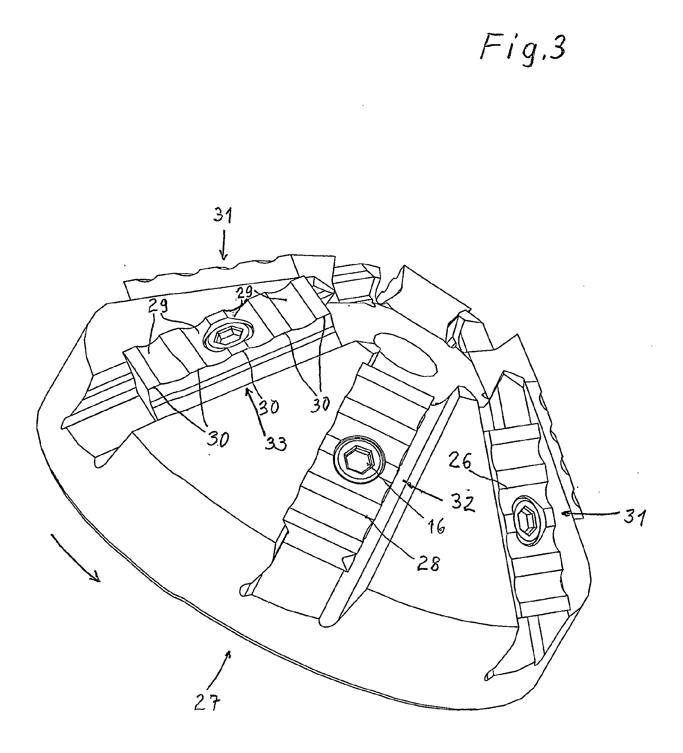

In Fig. 3 sind auf einen mit Ausnahme der Gewindebohrungen gleichen konischen Fräskopf 27 wie in Fig. 3 sechs anders gestaltete Wen deplatten 28 montiert. Die Wendeplatten 28 haben im wesentlichen den gleich en Querschnitt wie die Wendeplatten 3, aber mehr als die doppelte Länge. Dabei sind jedoch ihre Schneidkanten durch Mulden 29 auf den Breitseiten der Wendeplatten 28 unterbrochen, so dass sie nur auf Abschnitten 30 in das Material eingreifen und somit wirksam werden können. Versetzt zu sein brauchen die Wendeplatten 28 also nur um so viel, dass die Abschnitte 30 versetzt sind. Unter diesen Umständen ist jeweils nur eine, von Sitz zu Sitz entsprechend geringfügig versetzte, Gewindebohrung für eine Schraube 16 vorhanden. Drei verschiedene Sitze 31, 32 und 33 sind eingerichtet.

Die Gesamtlänge der Abschnitte 30 beträgt nur 10 mm.
Auf ihrer größeren Länge sind die Wendeplatten 28 besonders fest gehalten mit der Folge einer großen Stabilität und Laufruhe.

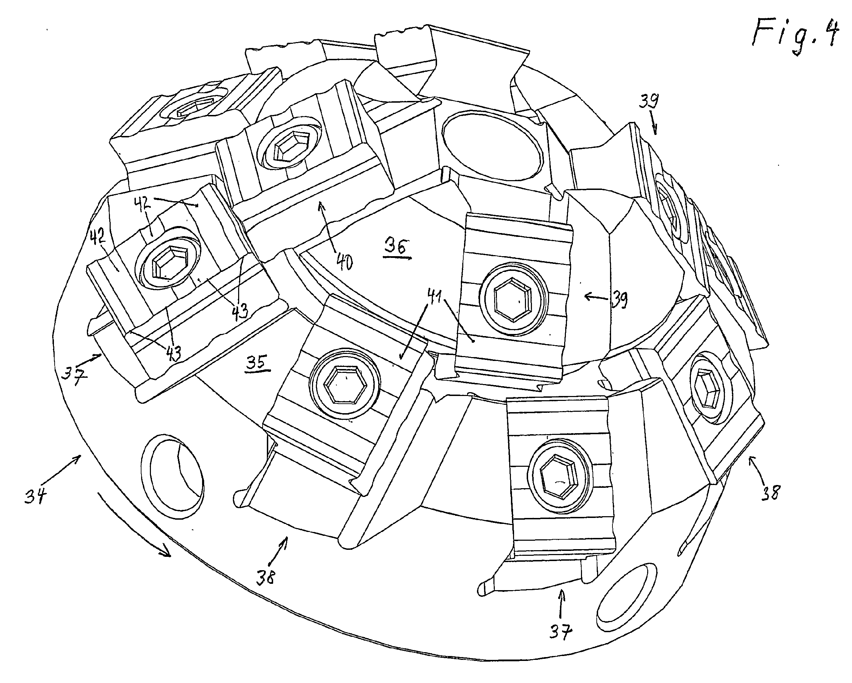

Der konische Fräskopf 34 in Fig. 4 besteht aus zwei z.B. durch Verschrauben oder Schrumpfen miteinander verbundenen Segmenten 35 und 36. Auf dem äußeren Segment 35 sind acht Sitze 37,38 ausgebildet, auf dem inneren Segment 36 vier Sitze 39,40. Die Sitze 38 und 40 sind gegenüber den Sitzen 37 bzw. 39 versetzt. Die Sitze 39 und 40 sind auf Lücke zwischen den Sitzen 37 und 38 angeordnet. Die Wendeplatten auf den Sitzen 38 entfernen jeweils den zwischen den beiden vorangehenden Wendeplatten (Sitze 37,39 bzw. 37,40) entstehenden Grat.

Die, mit 41 bezeichneten, Wendeplatten haben im Prinzip die gleiche Ausbildung wie die Wendeplatten 28. Sie sind aber kürzer und haben nur drei statt vier Mulden 42 und dementsprechend vier statt fünf Schneidkan ten-Abschnitte 43.

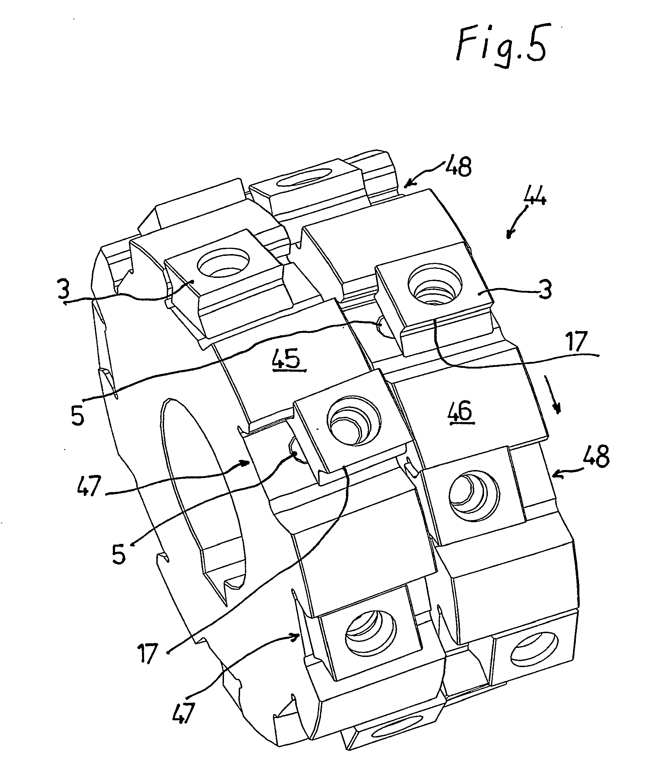

In Fig. 5 besteht ein zylindrischer Fräskopf 44 aus zwei miteinander verschraubten Segmenten 45 und 46. Auf beiden Segmenten 45 und 46 sind je acht Sitzausbildungen 47 bzw. 48 geformt. Die Wendeplatten 3 sind abwechselnd unter Verwendung der einen und der anderen Gewindebohrung 5 befestigt. Dabei steht jede zweite Wendeplatte 3 geringfügig auf das andere Segment 45 bzw. 46 über, so dass hier kein Grat entsteht.
Die Sitzausbildungen 47 und 48 sind leicht schräg gegen die Mantellinien des zylindrischen Fräskopfes ausgerichtet, und zwar die Sitzausbildungen 48 im Gegensinn zu den Sitzausbildungen 47.

Im übrigen sind an allen beschriebenen Fräsköpfen 1,20,27,34 und 44 die Sitze so gestellt, dass der Spanwinkel und der Freiwinkel jeweils etwa 12° betragen (bei den konischen Fräsköpfen 1, 27 und 34 im Mittel).
Sind Fasen zu fräsen, deren Breite geringer als die Schneidkantenlänge ist, kann, bei Verwendung derselben Fräsköpfe, auf die Versetzung verzichtet werden.

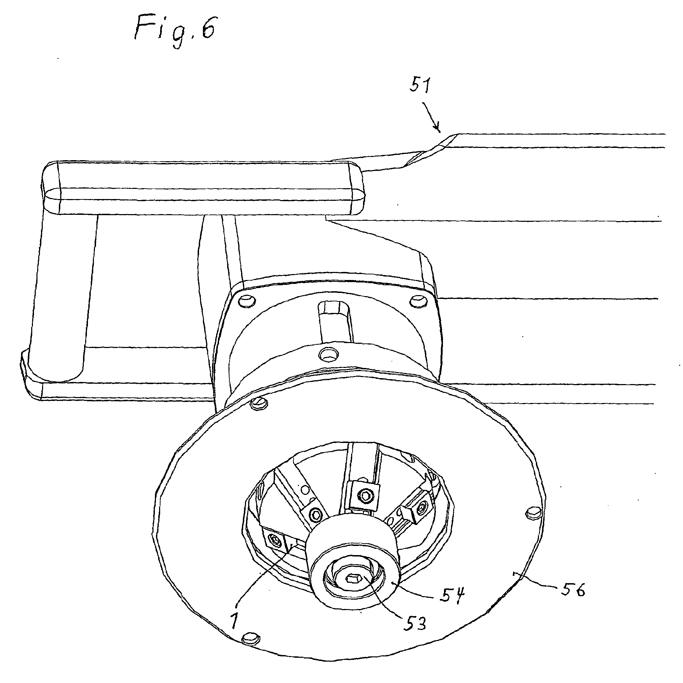

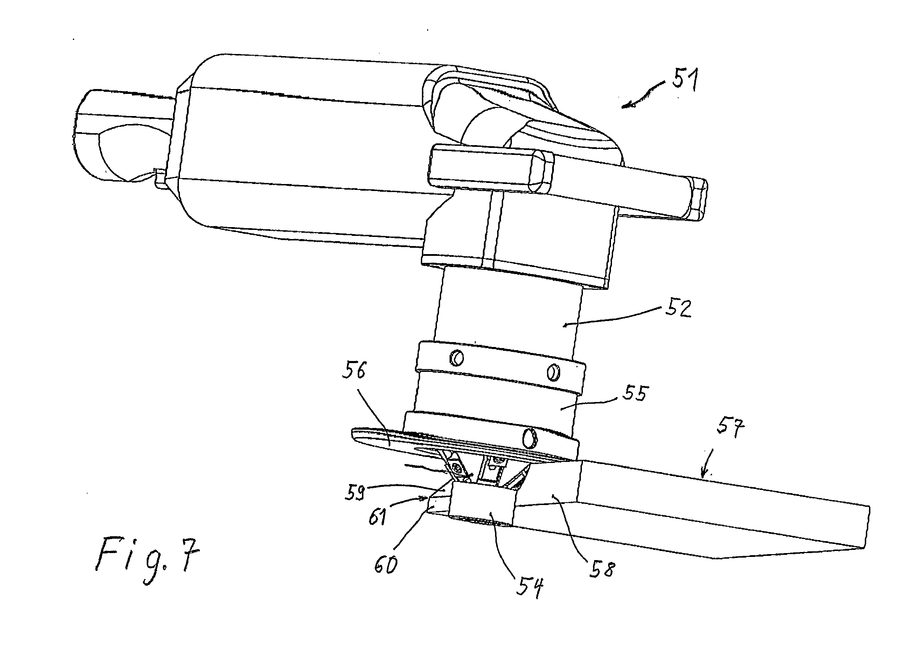

In Fig. 6 sitzt der Fräskopf 1 an einer Handfräsmaschine 51. Er ist auf die, sonst von einer zylindrischen Hülse 52 umgebene, Abtriebswelle der Handfräsmaschine 51 drehfest montiert.
An das aus dem Fräskopf 1 herausragende Ende der Abtriebswelle ist über ein Kugellager 53 eine frei drehbare Rolle 54 angesetzt.
Auf der Hülse 52 sitzt axial verschiebbar, dabei aber drehfest, und in verschiedenen axialen Stellungen fixierbar eine Manschette 55 als Halterung für eine ringförmige Scheibe 56.
Die Scheibe 56 und die Rolle 54 sind in der aus Fig. 7 ersichtlichen "Weise als Anschläge der Oberfläche 57 bzw. der Seitenfläche 58 des Werkstücks zugeordnet und bilden somit eine Führung. Die Rolle 54 liegt dabei an der nach dem Fräsen der Fase 59 verbleibenden Restfläche 60 der Seitenfläche 58 an. Vorzugsweise ist sie leicht konisch oder an ihrem oberen Ende mit einem flachen B und versehen, so dass sie nur einen schmalen Streifen entlang der Kante 61 zwischen Fase 59 und Restfläche 60 berührt. Damit werden Fehler vermieden, die durch Schragstellungen der Restfläche 60 oder einen Grat an ihrer Unterkante hervorgerufen werden könnten.
Es versteht sich, dass die Achse des Fräskopfs 1 hier möglichst senkrecht zu der Oberfläche 57 des Werkstücks gehalten wird.

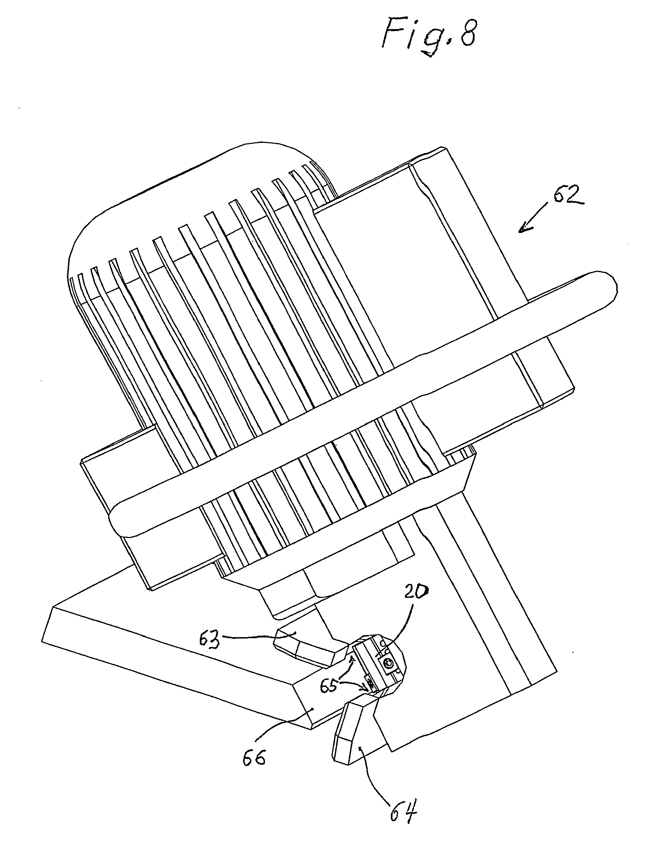

In Fig. 8 sitzt der zylindrische Fräskopf 20 auf der Abtriebswelle der mit 62 bezeichneten, Handfräsmaschine.
Als eine Führung bildende Anschläge sind zwei Leisten 63 und 64 vorgesehen. Der Fräskopf 20 ragt mit seinen axialen Enden in Einbuchtungen 65 der Leisten 63 und 64. Die Leisten 63 und 64 sind mit dem Gehäuse der Handfräsmaschine 62 fest verbunden. Sie können entsprechend der Winkelstellung der, hier mit 66 bezeichneten, Fase in verschiedene Winkelstellungen gebracht werden.

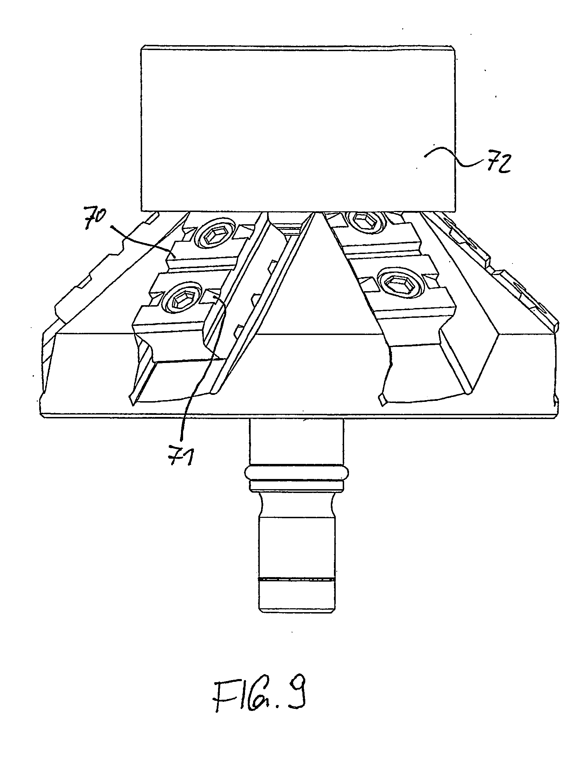

Fig. 9 zeigt einen weiteren, dem Fräskopf von Fig. 3 ähnlichen Fräskopf. Die Schneidkanten von Wendeplatten 70 sind hier jedoch nicht ausschließlich durch über die Plattenbreite durchgehende Mulden sondern unter anderem durch im Querschnitt trapezförmige Randausnehmungen 71 unterbrochen. Zwischen zwei einander gegenüberliegenden Randausnehmungen 71 ist jeweils eine Bohrung für die Befestigung der Wendeplatte 70 in ihrem Sitz vorgesehen. Der Fräskopf ist mit einem ein Distanzstück bildenden Führungslager 72 verbunden.

Durch die Randausnehmungen 71 könnten zurückversetzte Nebenschneiden mit einem eigenen Freiwinkel gebildet sein. Bei größeren Eindringtiefen der Schneiden kommen die Nebenschneiden zum Einsatz. In der gezeigten Ausführungsform mit "negativem" Freiwinkel setzen die Freiwinkelflächen auf und begrenzen so ein tieferes Eindringen der Schneiden. Durch geeignete Wahl der Taschentiefen und/oder von Freiwinkeln können diese, insbesondere für Handmaschinen bedeutsamen Effekte gezielt eingestellt werden. Die Maschine hakt dadurch beim Ansetzen nicht ein. Die Kanten der Randausnehmungen sind zweckmäßig durch Bürsten verrundet. Durchgehende Mulden können als Trennstellen dienen, um Wendeplatten zu teilen.

## Patentansprüche

1. Fräskopf zum Fräsen von Fasen, insbesondere für einen mobilen Fasenfräser, mit aufeinanderfolgenden Sitzen für Schneidplatten,
**dadurch gekennzeichnet,**
**dass** die Sitze (6-8;23-26;31-33;37-40)
eine Stellung haben, bei der die vorgesehenen Schneidplatten (3;28;41), die einen Keilwinkel von 40 bis 75° aufweisen, jeweils im Mittel mit einem positiven Spanwinkel von mindestens 6° und einem Freiwinkel von mindestens 6° arbeiten,
und für einen Besatz mit Schneidplatten (3;28;41) unter versetzter Anordnung der Schneidkanten derart vorgesehen sind, dass jeweils nur eine Schneidkantenlänge wirksam ist, welche höchstens 70% der entsprechend der Fasenbreite erforderlichen Gesamtschneidkantenlänge beträgt.

2. Fräskopf nach Anspruch 1,
**gekennzeichnet durch** eine wirksame Schneidkantenlänge der vorgesehenen Schneidplatten (3;28;41) von höchstens 30 mm, vorzugsweise höchstens 15 mm, insbesondere höchstens 12 mm.

3. Fräskopf nach Anspruch 1 oder 2,
**dadurch gekennzeichnet,**
**dass** die Schneidkante(n) (17) der vorgesehenen Schneidplatten (3;41) an ihren Enden jeweils durch eine Fase (50) der Schneidplatte schräg abgewi n-kelt (49) ist bzw. sind.

4. Fräskopf nach Anspruch 1 oder 2,
**gekennzeichnet durch** eine solche Anordnung der Sitze (47;48), dass die Schneidkanten (17) in einem kleinen Winkel schräg zur Mantellinie des Fräskopfes (44) ausgerichtet sind.

5. Fräskopf nach einem der Ansprüche 1 bis 4,
**dadurch gekennzeichnet,**
**dass** die vorgesehenen Schneidplatten als Wendeplatten (3;28;41) und im ganzen quaderförmig mit zwei Breitseiten ausgebildet sind und die Sitze eine Auflagefläche (4) für die eine Breitseite und eine die Schubkraft übertragende Stützfläche (9) für eine Schmalseite oder umgekehrt aufweisen und die Wendeplatten (3;28;41) an der der Stützfläche (9) abgewandten Seite eine zwei Spanflächen (10) bildende Einkehlung aufweisen, die, ggf. abgesehen von etwaigen Ein- und/oder Ausbuchtungen ihrer die Schneidkanten bildenden Ränder, einen durchgehend gleichbleibenden und zu der Mittelebene der Wendeplatte spiegelbildlichen Querschnitt hat, wobei die beiden Spanflächen (10) eben sind und vorzugsweise in einem Winkel von 80 bis 160° zueinander stehen oder entsprechend einer Einkehlung runden Querschnitts konkav sind.

6. Fräskopf nach einem der Ansprüche 1 bis 5,
**dadurch gekennzeichnet,**
**dass** die vorgesehenen Wendeplatten (28;41) an ihren Breitseiten die Schneidkante(n) (30;43) unterbrechende Ausnehmungen (29;42) aufweisen.

7. Fräskopf nach einem der Ansprüche 1 bis 6,
**dadurch gekennzeichnet,**
**dass** sich Sitzausbildungen (2;21;47;48) über die ganze Mantellinie des, konischen oder zylindrischen, Fräskopfs (1;20;44) erstrecken und unterschiedliche Sitze (6-8;23-26) für die Schneidplatten (3) durch unterschiedlich angeordnete Gewindebohrungen (5) für eine Befestigungsschraube (16) der Schneidplatte (3) aufweisen.

8. Fräskopf nach einem der Ansprüche 1 bis 6,
**dadurch gekennzeichnet,**
**dass** an einem, konischen oder zylindrischen, Fräskopf (34;44) die Sitze (37-40; 47;48) in zwei koaxialen Reihen angeordnet sind und der Fräskopf (34;44) aus zwei jeweils eine der Reihen aufweisenden Segmenten (35;36;45;46) zusammengesetzt ist.

9. Fräskopf nach einem der Ansprüche 1 bis 6 oder 8,
**dadurch gekennzeichnet,**
**dass** an einem konischen Fräskopf (34) die Sitze (37-40) in zwei koaxialen Reihen angeordnet sind und die äußere Reihe doppelt so viele Sitze (37;38) wie die innere aufweist.

10. Fräskopf nach einem der Ansprüche 1 bis 9,
**dadurch gekennzeichnet,**
**dass** er mit einer in seiner Nähe an der betreffenden Maschine (51;62) angebrachten Führung in Form von Anschlägen (54;56;63;64), die den beiden die Fase (49;66) begrenzenden Flächen (57;60) des Werkstücks zugeordnet sind, versehen ist.

11. Fräskopf nach Anspruch 10,
**dadurch gekennzeichnet,**
**dass** im Falle eines zylindrischen Fräskopfes (2) die Anschläge gleitende oder mit Rollen versehene Leisten (63;64) o.ä. sind.

12. Fräskopf nach Anspruch 10,
**dadurch gekennzeichnet,**
**dass** im Falle des konischen Fräskopfes (1) der eine Anschlag eine, vorzugsweise gegenüber dem Fräskopf (1) axial verschiebbare und fixierbare, Scheibe (56) ist und der andere Anschlag eine frei drehbare Rolle (54) ist, die vorzugsweise nur eine schmale ringförmige Anschlagfläche an ihrem dem Fräskopf (1) zugewandten axialen Ende aufweist.

## Claims

1. Milling head for milling chamfers, in particular for a mobile chamfer milling cutter, having successive seats for cutting inserts, **characterized in that** the seats (6-8; 23-26; 31-33; 37-40) have a position in which the cutting inserts (3; 28; 41) provided, which have a wedge angle of 40 to 75°, each work on average with a positive rake angle of at least 6° and a clearance angle of at least 6°, and, for a complement with cutting inserts (3; 28; 41) in an offset arrangement of the cutting edges, are provided in such a way that in each case only one cutting edge length, which amounts at most to 70% of the overall cutting edge length required in accordance with the chamfer width, is effective.

2. Milling head according to Claim 1, **characterized by** an effective cutting edge length of the cutting inserts (3; 28; 41) provided of at most 30 mm, preferably at most 15 mm, in particular at most 12 mm.

3. Milling head according to Claim 1 or 2, **characterized in that** the cutting edge or edges (17) of the cutting inserts (3; 41) provided is or are obliquely angled (49) at the ends thereof in each case by a chamfer (50) of the cutting insert.

4. Milling head according to Claim 1 or 2, **characterized by** such an arrangement of the seats (47; 48) that the cutting edges (17) are oriented at a small angle obliquely to the generatrix of the milling head (44).

5. Milling head according to one of Claims 1 to 4, **characterized in that** the cutting inserts provided are designed as indexable inserts (3; 28; 41) and on the whole in a parallelepiped shape having two wide sides, and the seats have a bearing surface (4) for the one wide side and a supporting surface (9), transmitting the thrust, for a narrow side, or vice versa, and the indexable inserts (3; 28; 41) have, on the side facing away from the supporting surface (9), a groove which forms two rake faces (10) and which has, possibly apart from any niches and/or bulges of its margins forming the cutting edges, a continuously uniform cross section mirror-symmetrical relative to the centre plane of the indexable insert, wherein the two rake faces (10) are planar and are preferably disposed at an angle of 80 to 160° to one another or are concave in accordance with a groove of round cross section.

6. Milling head according to one of Claims 1 to 5, **characterized in that** the indexable inserts (28; 41) provided have at their wide sides recesses (29; 42) interrupting the cutting edge(s) (30; 43).

7. Milling head according to one of Claims 1 to 6, **characterized in that** seat designs (2; 21; 47; 48) extend over the entire generatrix of the conical or cylindrical milling head (1; 20; 44) and have different seats (6-8; 23-26) for the cutting inserts (3) by means of differently arranged tapped holes (5) for a fastening screw (16) of the cutting insert (3).

8. Milling head according to one of Claims 1 to 6, **characterized in that** the seats (37-40; 47; 48) are arranged in two coaxial rows on a conical or cylindrical milling head (34; 44), and the milling head (34; 44) is composed of two segments (35; 36; 45; 46) in each case having one of the rows.

9. Milling head according to one of Claims 1 to 6 or 8, **characterized in that**, on a conical milling head (34), the seats (37-40) are arranged in two coaxial rows and the outer row has twice as many seats (37; 38) as the inner row.

10. Milling head according to one of Claims 1 to 9, **characterized in that** it is provided with a guide which is attached in its vicinity to the relevant machine (51; 62) and is in the form of stops (54; 56; 63; 64) which are assigned to the two surfaces (57; 60) of the workpiece which define the chamfer (59; 66).

11. Milling head according to Claim 10, **characterized in that**, in the case of a cylindrical milling head (2), the stops are sliding strips (63, 64) or strips (63, 64) provided with rollers, or the like.

12. Milling head according to Claim 10, **characterized in that**, in the case of the conical milling head (1), the one stop is a disc (56) which can preferably be axially displaced and fixed relative to the milling head (1), and the other stop is a freely rotatable roller (54) which preferably has only a narrow annular stop surface at its axial end facing the milling head (1).

## Revendications

1. Tête de fraisage pour le fraisage de biseaux, en particulier pour une fraise de biseau mobile, présentant des sièges consécutifs pour des plaquettes de coupe, **caractérisée en ce que** les sièges (6-8;23-26;31-33;37-40)
- présentent une position dans laquelle les plaquettes de coupe prévues (3;28;41), qui présentent un angle de taillant de 40 à 75°, travaillent à chaque fois en moyenne avec un angle de coupe positif d'au moins 6° et un angle de dépouille d'au moins 6°,
- et sont prévus pour une garniture avec les plaquettes de coupe (3;28;41) avec une disposition décalée des bords de coupe de manière telle que seulement une des longueurs des bords de coupe est à chaque fois active, qui représente au plus 70% de la longueur totale du bord de coupe nécessaire en fonction de la largeur du biseau.

2. Tête de fraisage selon la revendication 1, **caractérisée par** une longueur de bord de coupe active des plaquettes de coupe prévues (3;28;41) d'au plus 30 mm, de préférence d'au plus 15 mm, en particulier d'au plus 12 mm.

3. Tête de fraisage selon la revendication 1 ou 2, **caractérisée en ce que** le/les bord(s) de coupe (17) des plaquettes de coupe prévues (3;41) est/sont plié(s) en biais (49) en leurs extrémités à chaque fois par un biseau (50) de la plaquette de coupe.

4. Tête de fraisage selon la revendication 1 ou 2, **caractérisée par** une disposition des sièges (47;48) telle que les bords de coupe (17) sont orientés sous un petit angle en biais par rapport à la ligne enveloppante de la tête de fraisage (44).

5. Tête de fraisage selon l'une quelconque des revendications 1 à 4, **caractérisée en ce que** les plaquettes de coupe prévues sont réalisées comme plaquettes réversibles (3;28;41) et présentent dans leur totalité une forme parallélépipédique rectangle avec deux côtés larges et les sièges présentent une surface d'appui (4) pour l'un des larges côtés et une surface support (9) transférant la force de poussée pour un petit côté ou inversement et les plaquettes réversibles (3;28;41) présentent sur le côté opposé à la surface support (9) une entaille formant deux surfaces de coupe (10), qui, à l'exception d'éventuelles échancrures ou d'éventuels bombements de ses bords formant les bords de coupe, présente une section continue constante inversée par rapport au plan central de la plaquette réversible, les deux surfaces de coupe (10) étant plates et se trouvant de préférence sous un angle de 80 à 160° l'une par rapport à l'autre ou étant concaves selon une échancrure de section ronde.

6. Tête de fraisage selon l'une quelconque des revendications 1 à 5, **caractérisée en ce que** les plaquettes réversibles prévues (28;41) présentent, sur leurs côtés larges, des évidements (29;42) interrompant le(s) bord(s) de coupe (30;43).

7. Tête de fraisage selon l'une quelconque des revendications 1 à 6, **caractérisée en ce que** les formations des sièges (2;21;47;48) s'étendent sur toute la ligne enveloppante de la tête de fraisage (1;20;44) conique ou cylindrique et présentent des sièges différents (6-8;23-26) pour les plaquettes de coupe (3) grâce à des trous taraudés (5) disposés différemment pour une vis de fixation (16) de la plaquette de coupe (3).

8. Tête de fraisage selon l'une quelconque des revendications 1 à 6, **caractérisée en ce que** sur une tête de fraisage conique ou cylindrique (34;44) les sièges (37-40; 47;48) sont disposés dans deux rangées coaxiales et la tête de fraisage (34;44) est constituée par deux segments (35;36;45;46) présentant à chaque fois une des rangées.

9. Tête de fraisage selon l'une quelconque des revendications 1 à 6 ou 8, **caractérisée en ce que** sur une tête de fraisage conique (34) les sièges (37-40) sont disposés en deux rangées coaxiales et la rangée extérieure présente deux fois plus de sièges (37;38) que la rangée intérieure.

10. Tête de fraisage selon l'une quelconque des revendications 1 à 9, **caractérisée en ce qu'**elle est prévue avec un guide disposé à sa proximité sur la machine concernée (51;62) sous forme de butées (54;56;63;64), qui sont associées aux deux surfaces (57;60) délimitant les biseaux (49;66) de la pièce.

11. Tête de fraisage selon la revendication 10, **caractérisée en ce que** dans le cas d'une tête de fraisage cylindrique (2) les butées sont des tringles (63;64) glissantes ou pourvues de rouleaux ou autres.

12. Tête de fraisage selon la revendication 10, **caractérisée en ce que** dans le cas de la tête de fraisage conique (1) l'une butée est un disque (56) pouvant de préférence être déplacé axialement par rapport à la tête de fraisage (1) et pouvant être fixé et l'autre butée est un rouleau (54) en rotation libre qui présente de préférence uniquement une surface de butée annulaire étroite sur son extrémité axiale orientée vers la tête de fraisage (1).
